# EUROPÄISCHE PATENTSCHRIFT

(11) **EP 3 119 637 B1**
(45) Veröffentlichungstag und Bekanntmachung des Hinweises auf die Patenterteilung: **17.11.2021**
(21) Anmeldenummer: 15713506.2
(22) Anmeldetag: 02.04.2015
(51) Int. Cl.: H02J 7/02, H02J 13/00, B60L 53/126, B60L 53/36, G01S 5/00, H04B 7/24, H04L 12/24, B60L 53/38, B60L 53/65, G01S 5/02, H02J 50/90, H04B 5/00

(54) **VERBINDUNGSEINHEIT UND VERFAHREN ZUR HERSTELLUNG EINER ASSOZIATIONSVERBINDUNG ZWISCHEN ELEKTROFAHRZEUG UND LADESTATION**
COUPLING UNIT AND METHOD TO CREATE ASSOCIATION COUPLING BETWEEN ELECTRIC VEHICLE AND CHARGING STATION
UNITÉ DE COUPLAGE ET PROCÉDÉ À PRÉPARATION DU COUPLAGE D'ASSOCIATION ENTRE VÉHICULE ÉLÉCTRIQUE ET STATION DE CHARGE

(30) Priorität: 05.06.2014 DE 102014210813
(43) Veröffentlichungstag der Anmeldung: 25.01.2017
(73) Patentinhaber: Siemens Aktiengesellschaft, 80333 München (DE)
(72) Erfinder: HEUER, Jörg, 82041 Oberhaching (DE); SCHMITT, Anton, 85591 Vaterstetten (DE); ZHANG, Xi, 81479 Muenchen (DE)
(86) Internationale Anmeldenummer: PCT/EP2015/057293
(87) Internationale Veröffentlichungsnummer: WO 2015/185244

(56) Entgegenhaltungen:
- WO-A1-2014/010447
- DE-A1-102012 204 021
- US-A1- 2012 095 830
- US-A1- 2013 049 456
- None

## Beschreibung

Die Erfindung betrifft Mittel und Verfahren zur Herstellung einer Assoziationsverbindung zwischen einem Elektrofahrzeugs und einer induktiven Ladestation.

Zur Aufladung eines Elektrofahrzeugs an einer Ladestation sind induktive Ladesysteme bekannt. Hierbei befinden sich sowohl an der Unterseite des Elektrofahrzeugs als auch in der bodenseitigen Ladestation Spulensysteme. Über ein magnetisches Wechselfeld, das dieses Spulensystem durchdringt, wird Energie von der Ladestation zum Elektrofahrzeug induktiv übertragen.

Ein induktiver Ladevorgang kann nach einer Positionierung des Elektrofahrzeugs auf der Ladestation durchgeführt werden, ohne dass hierzu ein Aussteigen des Fahrzeugführers oder eine Verbindung mit einem Ladekabel erforderlich ist. Zum Austausch von Positionierungs-, Identifizierungs- und Abrechnungsinformationen hat sich eine Kommunikationsverbindung zwischen der Ladestation und dem Elektrofahrzeug bewährt, welche während des Anfahrvorgangs und während des Aufladungsvorgangs bei einem Stillstand des Elektrofahrzeugs aufrechterhalten bleibt.

Um ein Elektrofahrzeug mit geringen Verlusten und geringer Streustrahlung induktiv zu laden, ist es notwendig, das Spulensystem der Ladestation und das Spulensystem des Elektrofahrzeugs möglichst exakt überlappend zu positionieren. Weiterhin muss eine eindeutige Zuordnung zwischen dem Elektrofahrzeug und der Ladestation erfolgen. Diese eindeutige Zuordnung bzw. »Assoziationsverbindung« ist erforderlich, um sicherzustellen, dass die Kommunikationsverbindung nur mit demjenigen Elektrofahrzeug unterhalten wird, welches auf einer vorbestimmten Ladestation induktiv geladen werden soll.

Zur Gewährleistung einer eindeutigen Zuordnung zwischen einem Elektrofahrzeug und einer vorgesehenen Ladestation sind bereits Verfahren bekannt. Gemäß einem in der Druckschrift DE 102012012860 A1 offengelegten Vorschlag der Anmelderin ist vorgesehen, eine Assoziationsverbindung zwischen einem Elektrofahrzeug und einer Ladestation über eine Kopplung einer fahrzeugseitigen Antenne mit einer ladestationsseitigen Antenne zu schaffen, wobei durch die Anordnung der fahrzeugseitigen Antenne zur ladestationsseitigen Antenne gewährleistet sein soll, dass nur diese beiden Antennen eine gemeinsame Verbindung aufbauen können. Hierzu ist eine Richtcharakteristik der ladestationsseitigen Antenne derart gestaltet, dass ein von der ladestationsseitigen Antenne abgestrahltes Signal lediglich in einem vorgebbaren Bereich um eine direkte Sichtlinie zwischen beiden Antennen empfangbar ist. Weiterhin ist vorgesehen, einen Betrieb der ladestationsseitigen Antenne erst bei Erreichen eines vorgebbaren Bereichs, insbesondere einer Ladeposition zu aktivieren, um ein Kompromittieren der Assoziationsverbindung zu erschweren.

WO 2014/010447 A1 beschreibt eine fahrzeuggetragene Kommunikationsvorrichtung, die ein Anfragesignal sendet, während die Sendeleistung in Stufen reduziert wird. Wenn ein Antwortsignal einer einzigen Stromspeiseeinrichtung empfangen wird, wird automatisch eine Kopplung mit einer Kommunikationseinrichtung auf der Seite der Stromspeiseeinrichtung durchgeführt.

US 2013/0049456 A1 beschreibt eine Vorrichtung und ein Verfahren zum Steuern eines magnetischen Feldes unter Verwendung von zwei Resonatoren in einem drahtlosen Energieübertragungssystem.

DE 10 2012 204 021 A1 beschreibt ein Verfahren zum Laden eines Energiespeichers eines elektrischen Kraftwagens, bei welchem Energie von einer fahrzeugexternen Ladeeinrichtung zu dem Energiespeicher des Kraftwagens übertragen wird.

US 2012/0095830 A1 beschreibt eine Vorrichtung und ein Verfahr zum Sammeln von Informationen über ein elektrisches Fahrzeug in Echtzeit zum Versteigern von Nebendiensten.

Das in der genannten Druckschrift angesprochene Problemfeld eines Kompromittierens der Assoziationsverbindung hat sich in weiteren Feldversuchen als Problem erwiesen. So besteht die Gefahr, dass ein Sender in einem Funkbereich der Ladestation in maliziöser Weise vorgibt, als Gegenstelle einer aufzubauenden Assoziationsverbindung ausgibt und hierzu mit seiner eigenen Sendeleistung die der an sich vorgesehenen Antenne der Ladestation übertrifft.

Aufgabe der Erfindung ist es, Maßnahmen zu schaffen, welche eine kompromittierungssichere Assoziationsverbindung eines Elektrofahrzeugs mit einer zur Ladung des Elektrofahrzeugs vorgesehenen Ladestation gewährleisten.

Die Aufgabe wird erfindungsgemäß durch ein Verfahren mit den Merkmalen des Patentanspruchs 1 gelöst.

Erfindungsgemäß ist ein Verfahren zur Herstellung einer Assoziationsverbindung zwischen einem Elektrofahrzeug und einer Ladestation vorgesehen, welches die nachfolgend erläuterten Schritte umfasst. In einem ersten Schritt erfolgt ein Aufbau der Assoziationsverbindung zwischen dem Elektrofahrzeug und der Ladestation unter Ausbildung einer gerichteten Funkverbindung. Unter einer gerichteten Funkverbindung ist eine Funkverbindung zu verstehen, bei welcher sowohl Sender- als auch Empfängerseitig eine Richtcharakteristik in einer vordefinierten Richtung vorgesehen ist. Eine gerichtete Funkverbindung erstreckt sich beispielsweise keulenförmig von einer Bodennähe der Ladestation platzierten Sender in Richtung einer Unterseite des Elektrofahrzeugs. In einem zweiten Schritt erfolgt eine Überprüfung der Assoziationsverbindung zwischen dem Elektrofahrzeug und der Ladestation in Zusammenwirkung mindestens eines die gerichtete Funkverbindung bewirkenden ersten Transmitters mit einem omnidirektionalen Transmitter; wobei zur Überprüfung der Assoziationsverbindung eine Transmissionsstärke der gerichteten Funkverbindung mit einer über den omnidirektionalen Transmitter übertragenen Transmissionsstärke verglichen wird ; und wobei ein negatives Ergebnis der Überprüfung ausgegeben wird, wenn die über den omnidirektionalen Transmitter übertragene Transmissionsstärke die Transmissionsstärke der gerichteten Funkverbindung übersteigt. Unter besagtem omnidirektionalen Transmitter ist ein Transmitter, also beispielsweise eine Antenne, mit ungerichteter, also beispielsweise kugelförmiger Richtcharakteristik zu verstehen.

Während die bereits vorbekannte gerichtete Funkverbindung eine Positionierung des Elektrofahrzeugs dahingehend unterstützt, dass eine beispielsweise auf Fahrzeugseite gemessene Transmissionsstärke mit einer fortschreitenden Annäherung an eine vorgesehenen Ladeposition aufgrund der Richtcharakteristik fortschreitend zunimmt und schließlich einen Maximalwert bei Erreichen der vorgesehenen Ladeposition einnimmt, kann mit der auf Fahrzeugseite gemessenen Transmissionsstärke alleine aufgrund der gerichteten Funkverbindung nicht unterschieden werden, ob die Funkverbindung von der hierfür vorgesehenen Ladestation oder von einem weiteren kompromittierenden Sender herrührt. Diesen Mangel beseitigt der erfindungsgemäße Schritt einer Überprüfung der Assoziationsverbindung zwischen dem Elektrofahrzeug und der Ladestation in Zusammenwirkung mit einem omnidirektionalen Transmitter. Mit einer vorzugsweise auf Elektrofahrzeugseite gemessenen Transmissionsstärke unter Einsatz des omnidirektionalen Transmitters wird ein Vergleich zwischen der Transmissionsstärke der omnidirektionalen Funkverbindung und der Transmissionsstärke der gerichteten Funkverbindung ermöglicht.

Die Aufgabe wird des Weiteren durch eine erfindungsgemäße Verbindungseinheit mit den Merkmalen des Patentanspruchs 8 gelöst.

Erfindungsgemäß ist eine Verbindungseinheit zur Herstellung einer Assoziationsverbindung zwischen einem Elektrofahrzeug und einer Ladestation vorgesehen, welches die nachfolgend erläuterten Funktionsgruppen umfasst. Die Verbindungseinheit verfügt über eine erste Schnittstelle zu mindestens einen ersten Transmitter, welcher eine im Wesentlichen gerichtete Transmissionscharakteristik aufweist. Die Verbindungseinheit verfügt des Weiteren über eine zweite Schnittstelle zu mindestens einem zweiten Transmitter, welcher eine im Wesentlichen omnidirektionale, das heißt ungerichtete Transmissionscharakteristik aufweist. Die Verbindungseinheit ist in Zusammenwirkung mit dem ersten Transmitter eingerichtet zum Aufbau einer Assoziationsverbindung zwischen dem Elektrofahrzeug und der Ladestation und ferner eingerichtet zur Überprüfung der Assoziationsverbindung in Zusammenwirkung mit dem zweiten Transmitter, wobei die Verbindungseinheit zur Überprüfung der Assoziationsverbindung eingerichtet ist, eine Transmissionsstärke der gerichteten Funkverbindung mit einer über den omnidirektionalen Transmitter übertragenen Transmissionsstärke zu vergleichen und wobei die Verbindungseinheit zur Ausgabe eines negativen Ergebnisses der Überprüfung eingerichtet ist, wenn die über den zweiten Transmitter übertragene Transmissionsstärke die Transmissionsstärke der gerichteten Funkverbindung übersteigt.

Die Erfindung umfasst ferner ein Elektrofahrzeug mit einer erfindungsgemäßen Verbindungseinheit sowie eine Ladestation mit einer erfindungsgemäßen Verbindungseinheit.

Weitere Ausgestaltungen der Erfindung sind Gegenstand der abhängigen Ansprüche.

Gemäß einer bevorzugten Ausgestaltung der Erfindung ist vorgesehen, dass die gerichtete Funkverbindung zwischen einem ladestationsseitig angeordneten, gerichteten Transmitter und einem elektrofahrzeugseitig angeordneten gerichteten Transmitter erfolgt.

Gemäß einer weiteren Ausgestaltung der Erfindung ist vorgesehen, dass der omnidirektionale Transmitter elektrofahrzeugseitig angeordnet ist.

Alternativ ist eine Ausgestaltung vorteilhaft, bei der omnidirektionale Transmitter sowohl elektrofahrzeugseitig als auch ladestationsseitig angeordnet sind. Die genannte Ausgestaltung gewährleistet, dass eine Transmission, also ein jeweils gegenüberliegender Sende- und Empfangsbetrieb auf beiden Seiten, das heißt ladestationsseitig und elektrofahrzeugseitig, symmetrisch erfolgt. Diese vorteilhafte Maßnahme ermöglicht eine Vorsehung identischer Verbindungseinheiten sowohl auf Seiten des Elektrofahrzeugs als auch auf Seiten der Ladestation.

Gemäß einer weiteren Ausgestaltung der Erfindung ist vorgesehen, dass der gerichtete Transmitter in geringer Entfernung zum omnidirektionalen Transmitter angeordnet ist. Diese Ausgestaltung betrifft vorzugsweise das Elektrofahrzeug, alternativ auch die Ladestation. Aufgrund der geringen Entfernung gemäß dieser Ausgestaltung wird eine Überprüfung der Assoziationsverbindung dahingehend vereinfacht, dass sowohl für die gerichtete Funkverbindung als auch für die omnidirektionale Funkverbindung im Wesentlichen ähnliche Betriebsbedingungen vorherrschen, welche die Überprüfung der Assoziationsverbindung erleichtern.

Bei dem Verfahren ist vorgesehen, dass zur Überprüfung der Assoziationsverbindung eine Transmissionsstärke der gerichteten Funkverbindung mit einer über den omnidirektionalen Transmitter übertragenen bzw. ermittelten Transmissionsstärke verglichen wird. Gemäß der Erfindung wird also die Transmissionsstärke, also Signalstärke beziehungsweise Feldstärke der omnidirektionalen mit der der gerichteten Funkverbindung verglichen. Die Überprüfung der Transmissionsstärke stellt dabei die vorteilhafteste Überprüfung der Assoziationsverbindung dar.

Bei dem Verfahren ist vorgesehen, dass zur Überprüfung der Assoziationsverbindung ein negatives Ergebnis ausgegeben wird, wenn die Transmissionsstärke der mit dem omnidirektionalen Transmitter übertragenen bzw. ermittelten Transmissionsstärke die Transmissionsstärke der gerichteten Funkverbindung übersteigt. Es ist nämlich davon auszugehen, dass ein kompromittierender weiterer Sender in maliziöser Absicht das von der Ladestation gesendete Funksignal zu überstimmen versucht.

Gemäß einer weiteren Ausgestaltung der Erfindung ist vorgesehen, dass die Assoziationsverbindung infolge dieses oben erläuterten negativen Ergebnisses gelöst wird und/oder eine Fehlermeldung ausgegeben wird. Bei einem negativen Ergebnis der Überprüfung der Assoziationsverbindung wird also eine bereits begonnene Assoziationsverbindung des Elektrofahrzeugs mit der hierfür vorgesehenen Ladestation gelöst, um eine fehlerhafte Zuordnung aufgrund eines kompromittierenden Senders zu vermeiden.

Im Folgenden werden weitere Ausführungsbeispiele und Vorteile der Erfindung anhand der Zeichnung näher erläutert. Dabei zeigen:
- Fig. 1: eine schematische Darstellung eines an eine Ladestation anfahrenden Elektrofahrzeugs; und
- Fig. 2: eine schematische Darstellung einer erfindungsgemäßen elektrofahrzeugseitigen Verbindungseinheit in Zusammenwirkung mit einer ladestationsseitigen Verbindungseinheit.

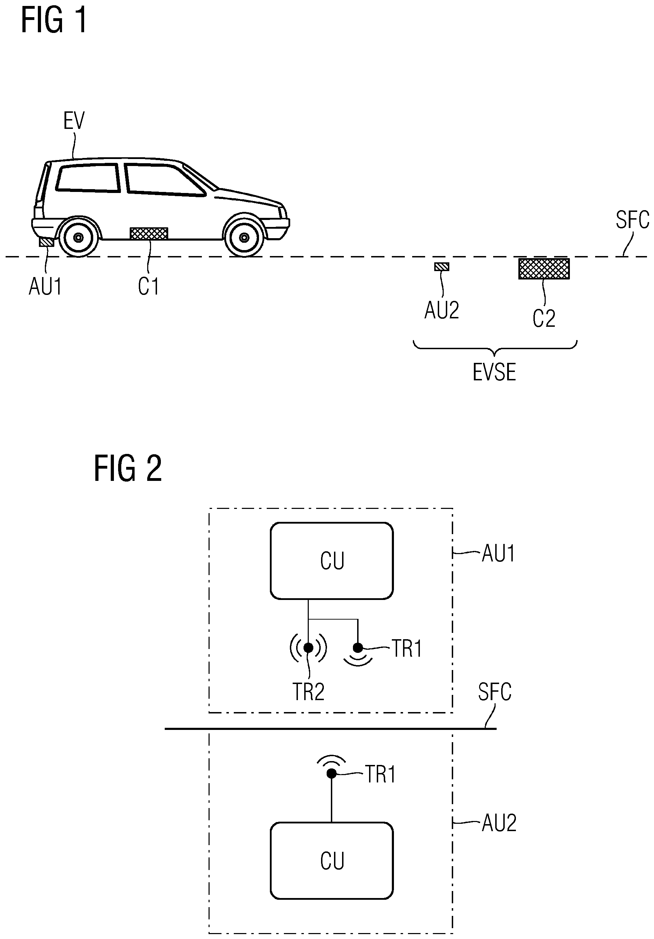

Fig. 1 zeigt ein Elektrofahrzeug EV, welches neben anderen - nicht dargestellten - Funktionskomponenten eine fahrzeugseitige Induktionsspule C1 sowie ein fahrzeugseitiges Verbindungsmodul AU1 aufweist, welche beispielsweise jeweils an der Unterseite des Elektrofahrzeugs EV angeordnet sind. In den folgenden Ausführungen wird angenommen, dass sich das Elektrofahrzeug EV einer induktiven Ladestation EVSE nähert, um nach einem Stillstand des Elektrofahrzeugs EV oder im Zuge einer langsamen Fahrt eine induktive Ladung von - nicht dargestellten - Akkumulatoren des Elektrofahrzeugs EV durchzuführen.

Die induktive Ladestation EVSE weist neben anderen - nicht dargestellten - Funktionskomponenten ein ladestationsseitiges Verbindungsmodul AU2 sowie eine ladestationsseitige Induktionsspule C2 auf. Die beiden letztgenannten Funktionskomponenten AU2, C2 befinden sich in Höhe, knapp oberhalb oder unterhalb eines Fahrbahnniveaus SFC.

Nach Erreichen einer Ladeposition wird eine Assoziierung des Elektrofahrzeugs EV und der Ladestation EVSE über eine Assoziationsverbindung durchgeführt, um zu verhindern, dass ein nicht berechtigtes Fahrzeug aufgeladen wird.

Fig. 2 zeigt eine Detaildarstellung eines fahrzeugseitigen Verbindungsmoduls AU1 und eines ladestationsseitigen Verbindungsmodul AU2, welches gemäß Zeichnung unterhalb des Fahrbahnniveaus SFC angeordnet ist. Die in Fig. 2 dargestellte Anordnung beider Verbindungsmodule AU1, AU2 entspricht einer vorgesehenen Parkposition, bei welcher beide Verbindungsmodule entlang ihrer Hauptachse fluchten. In einer solchen Parkposition ist auch die fahrzeugseitige Induktionsspule C1 direkt oberhalb und im Wesentlichen deckungsgleich zur ladestationsseitigen Induktionsspule C2 angeordnet.

Das elektrofahrzeugseitige Verbindungsmodul AU1 umfasst eine Verbindungseinheit CU, einen ersten Transmitter TR1 bzw. Antenne TR1 und einen zweiten Transmitter TR2 bzw. Antenne TR2. Das ladestationsseitige Verbindungsmodul AU2 umfasst eine Verbindungseinheit CU sowie einen ersten Transmitter TR1 bzw. Antenne TR1. Der jeweilige erste Transmitter TR1 weist eine im Wesentlichen gerichtete Transmissionscharakteristik auf, der zweite Transmitter TR2 eine im Wesentlichen omnidirektionale Transmissionscharakteristik.

In dem gemäß Fig. 2 erläuterten Ausführungsbeispiel weist das ladestationsseitige Verbindungsmodul AU2 lediglich einen ersten gerichteten Transmitter TR1 auf. In einer alternativen - nicht dargestellten - Ausführungsform ist jedoch auch eine mit dem elektrofahrzeugseitigen Verbindungsmodul AU1 im Wesentlichen identische Ausgestaltung des ladestationsseitigen Verbindungsmoduls AU2 möglich, bei der also auch das ladestationsseitige Verbindungsmodul AU2 einen zweiten Transmitter TR2 mit einer im Wesentlichen omnidirektionalen Transmissionscharakteristik umfasst.

Omnidirektionale Transmitter senden oder empfangen ungerichtet, d.h. im Wesentlichen kugelförmig in Richtung ihrer Hauptachse und sind bevorzugt als Stabantenne ausgeführt. Direktionale oder gerichtete Transmitter ermöglichen eine Ausrichtung der Transmission in einer vorgebbaren Richtung. Diese sind bevorzugt als Antenne mit einer entsprechenden Geometrie ausgeführt Üblicherweise weisen diese eine keulenförmige Richtcharakteristik in Richtung ihrer Hauptachse auf.

Wird nun mittels eines - nicht dargestellten - kompromittierenden Senders versucht, eine Funkverbindung zum fahrzeugseitigen Verbindungsmodul AU1 aufzubauen, könnte der kompromittierende Sender seine eigene Transmissionsstärke so erhöhen, dass diese die Transmissionsstärke des ladestationsseitigen Verbindungsmoduls AU2 übertrifft. Im Stand der Technik wäre lediglich ein erster Transmitter TR1 mit einer gerichteten Transmissionscharakteristik im elektrofahrzeugseitigen Verbindungsmodul AU1 enthalten. Mit einem solchen gerichteten Transmitter TR1 alleine kann jedoch keine Beurteilung erfolgen, ob die Ladestation EVSE oder der kompromittierende Sender der richtige Verbindungspartner der Assoziationsverbindung ist.

Erfindungsgemäß ist daher eine Überprüfung der Assoziationsverbindung zwischen dem Elektrofahrzeug EV und der Ladestation EVSE durch den im elektrofahrzeugseitigen Verbindungsmodul AU1 vorgesehenen omnidirektionalen Transmitter TR2 vorgesehen.

Weist die vom zweiten elektrofahrzeugseitigen Transmitter TR2 empfangene Transmissionsstärke einen höheren oder eine wesentlich höheren Wert auf als die die vom ersten elektrofahrzeugseitigen Transmitter TR1 empfangene Transmissionsstärke, ist von einem kompromittierenden Sender auszugehen.

Nachdem das Elektrofahrzeug EV eine Parkposition im Bereich seiner zugeordneten Ladestation EVSE eingenommen hat, wird die zum Austausch von Positionierungs-, Identifizierungs- und Abrechnungsinformationen einzurichtende Funkverbindung zwischen der Ladestation EVSE und dem Elektrofahrzeug EV vorzugsweise über die jeweiligen gerichteten ersten Transmitter TR1 unterhalten.

Es erweist sich als vorteilig zur Ausführung der Erfindung, dass gängige Steuereinheiten zur Unterhaltung von Funkverbindungen mit sogenannten »Wireless Interfache Chips« eine Mehrzahl von Transmitter bzw. Antennen unterstützen und eine dynamische Umschaltung zwischen den Antennen unterstützen. Auf diese Weise sind die erfindungsgemäßen Mittel mit marktgängigen Komponenten zu verwirklichen.

Der erfindungsgemäße Ansatz sieht zusammenfassend vor, bei einem Aufbau einer Assoziationsverbindung zwischen einem Elektrofahrzeug EV und einer Ladestation EVSE ein Transmitterpaar TR1, TR2 mit einer omnidirektionalen und mit einer gerichteten Transmissionscharakteristik vorzusehen. Nachdem ein Aufbau der Assoziationsverbindung unter Ausbildung einer gerichteten Funkverbindung erfolgt, wird diese mit Beteiligung eines omnidirektionalen Transmitters TR2 überprüft. Diese Maßnahme ermöglicht ein Unterbinden einer unerwünschten Assoziationsverbindung mit einem kompromittierenden Sender.

## Patentansprüche

1. Verfahren zur Herstellung einer Assoziationsverbindung zwischen einem Elektrofahrzeug (EV) und einer Ladestation (EVSE), umfassend folgende Schritte:
- Aufbau der Assoziationsverbindung zwischen dem Elektrofahrzeug (EV) und der Ladestation (EVSE) unter Ausbildung einer gerichteten Funkverbindung;
- Überprüfung der Assoziationsverbindung zwischen dem Elektrofahrzeug (EV) und der Ladestation (EVSE) in Zusammenwirkung mindestens eines die gerichtete Funkverbindung bewirkenden ersten Transmitters (TR1) mit einem omnidirektionalen Transmitter (TR2),
wobei zur Überprüfung der Assoziationsverbindung eine Transmissionsstärke der gerichteten Funkverbindung mit einer über den omnidirektionalen Transmitter (TR2) übertragenen Transmissionsstärke verglichen wird und wobei ein negatives Ergebnis der Überprüfung ausgegeben wird, wenn die über den omnidirektionalen Transmitter (TR2) übertragene Transmissionsstärke die Transmissionsstärke der gerichteten Funkverbindung übersteigt.

2. Verfahren nach Patentanspruch 1, **dadurch gekennzeichnet, dass** die gerichtete Funkverbindung zwischen einem ladestationsseitig angeordneten gerichteten Transmitter (TR1) und einem elektrofahrzeugseitig angeordneten gerichteten Transmitter (TR1) erfolgt.

3. Verfahren nach einem der vorgenannten Ansprüche, **dadurch gekennzeichnet, dass** der omnidirektionale Transmitter (TR2) elektrofahrzeugseitig angeordnet ist.

4. Verfahren nach einem der vorgenannten Ansprüche 2 und 3, **dadurch gekennzeichnet, dass** der gerichteten Transmitter (TR1) in geringer Entfernung zum omnidirektionalen Transmitter (TR2) angeordnet ist.

5. Verfahren nach einem der vorgenannten Ansprüche, dass die Assoziationsverbindung in Folge eines negativen Ergebnisses gelöst wird und/oder eine Fehlermeldung ausgegeben wird.

6. Verbindungseinheit zur Herstellung einer Assoziationsverbindung zwischen einem Elektrofahrzeug (EV) und einer Ladestation (EVSE), umfassend:
- eine Schnittstelle zu mindestens einem ersten Transmitter (TR1), der erste Transmitter (TR1) aufweisend eine im Wesentlichen gerichtete Transmissionscharakteristik; und
- eine Schnittstelle zu mindestens einem zweiten Transmitter (TR2), der zweite Transmitter (TR2) aufweisend eine im Wesentlichen omnidirektionale Transmissionscharakteristik;
wobei die Verbindungseinheit (CU) in Zusammenwirkung mit dem ersten Transmitter (TR1) eingerichtet ist zum Aufbau einer Assoziationsverbindung zwischen dem Elektrofahrzeug (EV) und der Ladestation (EVSE); und
wobei die Verbindungseinheit (CU) in Zusammenwirkung mit dem zweiten Transmitter (TR2) eingerichtet ist zur Überprüfung der Assoziationsverbindung,
wobei die Verbindungseinheit (CU) zur Überprüfung der Assoziationsverbindung eingerichtet ist, eine Transmissionsstärke der gerichteten Funkverbindung mit einer über den omnidirektionalen Transmitter (TR2) übertragenen Transmissionsstärke zu vergleichen und wobei die Verbindungseinheit (CU) zur Ausgabe eines negativen Ergebnisses der Überprüfung eingerichtet ist, wenn die über den zweiten Transmitter (TR2) übertragene Transmissionsstärke die Transmissionsstärke der gerichteten Funkverbindung übersteigt.

7. Elektrofahrzeug, umfassend eine Verbindungseinheit gemäß Patentanspruch 6.

8. Ladestation, umfassend eine Verbindungseinheit gemäß Patentanspruch 6.

## Claims

1. Method for making an associative connection between an electric vehicle (EV) and a charging station (EVSE), comprising the following steps:
- setting up the associative connection between the electric vehicle (EV) and the charging station (EVSE) by forming a directional radio link;
- checking the associative connection between the electric vehicle (EV) and the charging station (EVSE) with the collaboration of at least one first transmitter (TR1) that prompts the directional radio link with an omnidirectional transmitter (TR2),
wherein the associative connection is checked by comparing a transmission strength of the directional radio link with a transmission strength transmitted via the omnidirectional transmitter (TR2) and wherein a negative result of the check is output if the transmission strength transmitted via the omnidirectional transmitter (TR2) exceeds the transmission strength of the directional radio link.

2. Method according to Patent Claim 1, **characterized in that** the directional radio link is made between a directional transmitter (TR1) arranged at the charging station and a directional transmitter (TR1) arranged on the electric vehicle.

3. Method according to either of the preceding claims, **characterized in that** the omnidirectional transmitter (TR2) is arranged on the electric vehicle.

4. Method according to either of preceding Claims 2 and 3, **characterized in that** the directional transmitter (TR1) is arranged at a short distance from the omnidirectional transmitter (TR2).

5. Method according to one of the preceding claims, **characterized in that** the associative connection is broken in consequence of a negative result, and/or an error message is output.

6. Connecting unit for making an associative connection between an electric vehicle (EV) and a charging station (EVSE), comprising:
- an interface to at least one first transmitter (TR1), the first transmitter (TR1) having an essentially directional transmission characteristic; and
- an interface to at least one second transmitter (TR2), the second transmitter (TR2) having an essentially omnidirectional transmission characteristic;
wherein the connecting unit (CU) is configured in collaboration with the first transmitter (TR1) to set up an associative connection between the electric vehicle (EV) and the charging station (EVSE); and
wherein the connecting unit (CU) is configured in collaboration with the second transmitter (TR2) to check the associative connection,
wherein to check the associative connection the connecting unit (CU) is configured to compare a transmission strength of the directional radio link with a transmission strength transmitted via the omnidirectional transmitter (TR2) and wherein the connecting unit (CU) is configured to output a negative result of the check if the transmission strength transmitted via the second transmitter (TR2) exceeds the transmission strength of the directional radio link.

7. Electric vehicle, comprising a connecting unit according to Patent Claim 6.

8. Charging station, comprising a connecting unit according to Patent Claim 6.

## Revendications

1. Procédé de fabrication d'un couplage d'association entre un véhicule électrique (EV) et une station de charge (EVSE), comprenant les étapes suivantes :
- création du couplage d'association entre le véhicule électrique (EV) et la station de charge (EVSE) par la formation d'une liaison radio dirigée ;
- contrôle du couplage d'association entre le véhicule électrique (EV) et la station de charge (EVSE) par l'interaction d'au moins un premier émetteur (TR1), effectuant la liaison radio dirigée, avec un émetteur omnidirectionnel (TR2),
dans lequel pour contrôler le couplage d'association, une intensité de transmission de la liaison radio dirigée est comparée à une intensité de transmission transmise par l'émetteur omnidirectionnel (TR2) et dans lequel un résultat négatif du contrôle est fourni, si l'intensité de transmission transmise par l'émetteur omnidirectionnel (TR2) dépasse l'intensité de transmission de la liaison radio dirigée.

2. Procédé selon la revendication 1, **caractérisé en ce que** la liaison radio dirigée se produit entre un émetteur (TR1) dirigé disposé du côté de la station de charge et un émetteur (TR1) dirigé disposé du côté du véhicule électrique.

3. Procédé selon l'une des revendications précédentes, **caractérisé en ce que** l'émetteur omnidirectionnel (TR2) est disposé du côté du véhicule électrique.

4. Procédé selon l'une des revendications précédentes 2 et 3, **caractérisé en ce que** l'émetteur dirigé (TR1) est disposé à faible distance par rapport à l'émetteur omnidirectionnel (TR2).

5. Procédé selon l'une des revendications précédentes, **caractérisé en ce que** le couplage d'association est délié à la suite d'un résultat négatif et / ou un message d'erreur est émis.

6. Unité de couplage pour l'établissement d'un couplage d'association entre un véhicule électrique (EV) et une station de charge (EVSE), comprenant :
- une interface avec au moins un premier émetteur (TR1), le premier émetteur (TR1) présentant une caractéristique de transmission essentiellement dirigée ; et
- une interface avec au moins un deuxième émetteur (TR2), le deuxième émetteur (TR2) présentant une caractéristique de transmission essentiellement omnidirectionnelle ;
dans laquelle l'unité de couplage (CU) est agencée en interaction avec le premier émetteur (TR1) pour créer un couplage d'association entre le véhicule électrique (EV) et la station de charge (EVSE) ; et
dans laquelle l'unité de couplage (CU) est agencée en interaction avec le deuxième émetteur (TR2) pour contrôler le couplage d'association,
dans laquelle l'unité de couplage (CU) pour contrôler le couplage d'association est agencée pour comparer une intensité de transmission de la liaison radio dirigée à une intensité de transmission transmise par l'émetteur omnidirectionnel (TR2) et dans laquelle l'unité de couplage (CU) est agencée pour fournir un résultat négatif du contrôle, si l'intensité de transmission transmise par le deuxième émetteur (TR2) dépasse l'intensité de transmission de la liaison radio dirigée.

7. Véhicule électrique, comprenant une unité de liaison selon la revendication 6.

8. Station de charge, comprenant une unité de liaison selon la revendication 6.
